# EUROPEAN PATENT SPECIFICATION

(11) **EP 3 442 696 B1**
(45) Date of publication and mention of the grant of the patent: **04.05.2022**
(21) Application number: 17716175.9
(22) Date of filing: 05.04.2017
(51) Int. Cl.: B01J 13/20, F28D 20/02, B01J 13/18, B01J 13/04

(54) **MICROCAPSULES**
MIKROKAPSELN
MICROCAPSULES

(30) Priority: 12.04.2016 GB 201606269; 17.08.2016 GB 201614045
(43) Date of publication of application: 20.02.2019
(73) Proprietor: Croda International PLC, Goole, East Yorkshire DN14 9AA (GB)
(72) Inventor: DUNGWORTH, Howard, Roger, Elland West Yorkshire HX5 0RU (GB); AUERBACH, Marco, 2716 CP Zoetermeer (NL); GONTHIER, Jerome, 2562 NV Den Haag (NL); PARKS, Emma, Warrington Cheshire WA3 7NR (GB)
(74) Representative: King, Angela Louise
(86) International application number: PCT/EP2017/058094
(87) International publication number: WO 2017/178297

(56) References cited:
- US-A1- 2009 227 451
- US-A1- 2009 274 906
- US-A1- 2010 036 020
- US-A1- 2011 003 152
- US-A1- 2011 269 657
- US-A1- 2012 196 116
- US-A1- 2012 205 576
- US-A1- 2012 276 210
- US-A1- 2015 361 227

## Description

### Field of the Invention

The present invention relates to microcapsules, a dispersion, powder or product comprising the microcapsules and a process of forming the microcapsules.

### Background

Microencapsulation systems for encapsulating active substances are known. The encapsulation process results in a microcapsule comprising a core of active substance surrounded by a polymer shell. Often the active substance is hydrophobic which allows the shell to be polymerized around particles (for example, droplets) of the hydrophobic substance which are dispersed and/or emulsified in aqueous medium and/or solvent.

Various methods for making core-and-shell microcapsules have been proposed in the literature. For instance it is known to encapsulate a hydrophobic core substance by dispersing the core substance into an aqueous medium containing a melamine formaldehyde pre-condensate and then reducing the pH resulting in a microcapsule comprising an aminoplast resin shell wall surrounding the core substance. Encapsulation of active substances is also known using acrylic monomers. Examples of acrylic monomer encapsulation include the following:
WO-A-99/24525 describes microcapsules with an alkane hydrocarbon (e.g. octadecane) core and a polymer shell formed from a monomer blend comprising: 30 to 100 wt% C₁₋₂₄ alkyl ester of (meth)acrylic acid (monomer I), up to 80 wt% of a di- or multifunctional monomer (monomer II) and up to 40 wt% of other monomers (monomer III). The examples of this document include microcapsules with shells which form approximately 10 to 15wt% of the total weight of the microcapsules. The total weight of the microcapsule is given by the combined weight of the shell and the core.
WO-A-01/54809 describes microcapsules with an octadecane core and a polymer shell formed from a monomer blend comprising: A) 30 to 90 wt% methacrylic acid, B) 10 to 70 wt% alkyl ester of (meth)acrylic acid which is capable of forming a homopolymer of glass transition temperature in excess of 60°C and C) 0 to 40 wt% other ethylenically unsaturated monomer. The examples of this document include microcapsules with shells which form 20 to 30wt% of the total weight of the microcapsules.
WO-A-2005/105291 describes microcapsules with an octadecane core and a polymer shell formed from a monomer blend comprising: A) 5 to 90% by weight of an ethylenically unsaturated water soluble monomer, B) 5 to 90% by weight of a multifunctional, monomer, and C) 0 to 55% by weight other monomer. An important aspect of this document is that the microcapsules exhibit a half height of at least 350°C which is an indication of the temperature resistance and strength of the microcapsules. The document specifies that the polymeric shell must form at least 8wt% of the total weight of the particles and that without this amount of polymeric shell, the capsules are not strong enough to achieve a half height of at least 350°C.

US 2011/003152 A1 discloses microcapsules comprising a wax encapsulated by a polymeric shell, where the polymeric shell forms 6wt% of the microcapsule.

A need exists to provide improved microcapsules or to address one or more disadvantages of the prior art.

### Summary of the Invention

The present invention is based in part on the recognition by the inventors that a high strength and/or temperature resistant microcapsule shell may be formed from a monomer blend which comprises from 50 to 99.9 wt% of a monomer which has more than one ethylenic double bond. Without being bound by theory, this major proportion of multi-ethylenically functional monomer enables a microcapsule to be produced with a shell that forms less than 8wt% of the total weight of the microcapsule and which has sufficient strength to be used in a wide variety of applications. A smaller proportion of shell by weight allows more active substance to be included in the core of the microcapsule per unit weight of the microcapsules. This provides a beneficial effect in that a smaller quantity of microcapsules is required to provide a given amount of active substance. In addition, a smaller amount of shell may cause less degradation to the beneficial properties of a microencapsulated core when compared with the properties of the core in bulk material form (i.e. non-encapsulated).

Viewed from a first aspect, the present invention provides microcapsules comprising a core within a polymeric shell, wherein:
a) the polymeric shell consists of a copolymer formed from:
   i) 50 to 99.9%, by weight of the polymeric shell, of a first shell monomer which is ethylenically unsaturated and which has more than one ethylenic double bond;
   ii) 0.01 to 50%, by weight of the polymeric shell, of a second shell monomer which is ethylenically unsaturated and which has one ethylenic double bond; and
b) the core comprises an active substance and wherein the active substance is a phase change material and wherein the core comprises at most 40wt% of hydrocarbon; and
c) the polymeric shell forms less than 8wt% of the total weight of the microcapsules,
characterized in that the first shell monomer comprises at least two functional groups selected from acrylate, methacrylate, acrylamido, methacrylamido, allyl, methallyl and vinyl, and,
wherein the second shell monomer is selected from acrylic acid, methacrylic acid, alkyl esters thereof and mixtures thereof, and,
wherein the microcapsules have a half height as measured by thermo gravimetric analysis of at least 350°C, where heat is applied to a dry sample of microcapsules at a rate of 20°C/minute and measuring the weight loss,
a half height value being the temperature at which half of the weight of the sample is lost.

Viewed from a second aspect, the present invention provides a process of forming microcapsules according to the first aspect of the invention, wherein the process comprises the steps of:
a) forming a polymerization system comprising an aqueous phase and a dispersed oil phase wherein the active substance is present in the oil phase;
b) polymerising the shell monomers to form the microcapsules comprising a core of the oil phase within the polymeric shell; and
c) optionally, neutralizing the microcapsules using a metal hydroxide or an amine.

### Detailed Description of the Invention

It will be understood that any upper or lower quantity or range limit used herein may be independently combined.

It will be understood that, when describing the number of carbon atoms in a substituent group (e.g. 'C1 to C6'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

Many of the chemicals which may be used to produce the present invention are obtained from natural sources. Such chemicals typically include a mixture of chemical species due to their natural origin. Due to the presence of such mixtures, various parameters defined herein can be an average value and may be non-integral.

The term 'phase change material' (PCM) is well known and refers to a class of material which may be used to store and/or release latent heat during a phase change of the material, for example a phase change from solid to liquid or vice-versa. The ability to store or release latent heat means the PCM may be used to regulate temperature in an environment and/or provide a cooling and/or heating effect.

### Process of forming the microcapsules

The process of forming the microcapsules comprises an aqueous phase and an oil phase. The oil phase may be a dispersed and/or emulsified oil phase. The aqueous phase, oil phase and all other ingredients used in the process of forming the microcapsules will be referred to herein as the 'polymerization system'.

One or more components of the microcapsule core may be present in the oil phase. Preferably, the active substance is present in the oil phase. A carrier material may also be present in the oil phase.

During formation of the microcapsules, the shell monomers are polymerized to form the polymeric shell around the core. Polymerising the shell monomers may form microcapsules comprising a core of the oil phase within a polymeric shell. The first shell monomer and/or the second shell monomer may be present in the oil phase. Preferably the first shell monomer is present in the oil phase. Preferably the second shell monomer is present in the oil phase. Preferably both the first and the second shell monomers are present in the oil phase.

The polymerization system may further comprise one or more emulsifiers and/or other surfactants. An emulsifier, which may have a high HLB (e.g. HLB of 10 to 20), may be dissolved into the aqueous phase to assist emulsification of the oil phase.

The polymerization system may further comprise at least one polymerization stabilizer. A polymerization stabilizer may be included in the aqueous phase and/or oil phase, preferably the aqueous phase. The polymerization stabilizer may be a hydrophilic polymer, for example a polymer containing pendant hydroxyl groups, for instance a polyvinyl alcohol or hydroxyethylcellulose. Generally it is preferred to use polyvinyl alcohol as a polymerization stabilizer. The polyvinyl alcohol may be used in aqueous solution. The aqueous solution may comprise 5 to 30wt% polyvinyl alcohol, preferably 5 to 20wt% polyvinyl alcohol, desirably about 10wt% polyvinyl alcohol. The polyvinyl alcohol may be derived from polyvinyl acetate, and preferably between 75 and 99% of the vinyl acetate groups are hydrolyzed to vinyl alcohol units. The polymerization stabilizer may be present at from 0.1 to 10wt% of the polymerization system, preferably from 0.5 to 5wt%.

The polymerization system may be a dispersion polymerization system, preferably a free-rise dispersion polymerization. The polyvinyl alcohol (PVOH) may provide stability to the polymerization system to maintain discrete particles in the dispersion. Another polymerization stabilizer which may be used is 2-acrylamido-2-methylpropane sulfonic acid (AMPS). AMPS and/or PVOH may be used to prevent the dispersion from reverting back to two immiscible layers (aqueous and oil).

The polymerization step may be effected by subjecting the shell monomers to any conventional polymerization conditions. Typically, the monomers are subjected to free radical polymerization. Generally polymerization is achieved by the use of suitable initiator compounds. Desirably this may be achieved by the use of redox initiators and/or thermal initiators, preferably by a thermal initiator.

The process of forming microcapsules may comprise the use of an initiator selected from Dialkyl peroxides, Hydroperoxides, Peroxyesters, Peroxyketals, Diacylperoxides, Peroxy(di)carbonates, Persulphates and Azo initiators.

The initiator is preferably selected from the group consisting of dicetyl peroxydicarbonate, di(4-tert-butylcyclohexyl) peroxydicarbonate, dioctanoyl peroxide, dibenzoyl peroxide, dilauroyl peroxide, didecanoyl peroxide, tert-butyl peracetate, tert-butyl perlaurate, tert-butyl perbenzoate, tert-butyl hydroperoxide, cumene hydroperoxide, cumene ethylperoxide, diisopropylhydroxy dicarboxylate, 2,2'-azobis(2,4-dimethyl valeronitrile), 2,2'-azobis(isobutyronitrile), 2,2'-azobis-(2-methylbutyronitrile), 1,1'-azobis(cyclohexane-1-carbonitrile), dimethyl 2,2'-azobis(2-methylpropionate), 2,2'-azobis[2-methyl-N-(2-hydroxyethyl) propionamide, 4,4'-azobis-(4-cyanovalereic acid) (ACVA) or t-butyl perpivilate and combinations thereof.

Redox initiators may include a reducing agent such as sodium sulphite, sulphur dioxide and an oxidizing compound such as ammonium persulphate or a suitable peroxy compound, such as tertiary butyl hydroperoxide etc. Redox initiation may employ up to 1000 ppm, typically in the range 1 to 100 ppm, normally in the range 4 to 50 ppm of redox initiator.

Preferably the polymerization step is effected by employing a thermal initiator. The thermal initiator may be employed alone or in combination with other initiator(s), for instance a redox initiator. Thermal initiators would include any suitable initiator compound that releases radicals at an elevated temperature, for instance azo compounds, such as azobisisobutyronitrile (AZDN), 4,4'-azobis-(4-cyanovalereic acid) (ACVA) or t-butyl perpivilate. Examples of suitable thermal initiators are Dilauroyl peroxide available as Luperox LP ex Arkema and 2,2'-azobis-(2-methylbutyronitrile) available as Vazo 67 ex DuPont.

Typically thermal initiators are used in an amount of up 50,000 ppm, based on total weight of shell monomer. In the present invention, a thermal initiator may be used in the range 5,000 to 20,000 ppm by weight of shell monomer, preferably 5,000 to 15,000 ppm, more preferably 8,000 to 12,000 ppm, desirably about 10,000ppm.

Preferably a suitable thermal initiator is combined with the first and/or second shell monomer prior to emulsification. Polymerization is effected by heating the emulsion to a suitable temperature, for instance at least 50°C, preferably at least 60°C, more preferably at least 70°C for sufficient time to effect polymerization. More preferably, polymerization is achieved by maintaining the emulsion at a temperature of between 70 and 90°C for a period of between 60 and 240 minutes, preferably between 90 and 180 minutes.

### Optional post-polvmerization steps

Once the microcapsules have been formed by polymerization, one or more optional post-polymerization steps may be taken.

If acidic shell monomers are used, the resulting microcapsules or microcapsule dispersion may also be acidic. In a further step, the microcapsules may be neutralized. The microcapsules may be neutralized by the use of a hydroxide, preferably a metal hydroxide, particularly an alkali metal hydroxide. Examples of suitable alkali metal hydroxides are NaOH, KOH, preferably sodium hydroxide. The microcapsules may also be neutralized by using an amine, for example ammonia, monoethanolamine, diethanolamine or triethanolamine, preferably ammonia. If an amine is used, this may assist aggregation of the microcapsules i.e. microcapsule aggregates which are formed may be more resistant to de-aggregation. Neutralization may advantageously increase the shear stability of the microcapsule dispersion. Increasing the pH of the dispersion towards neutral also reduces the likelihood that corrosion is caused by the dispersion.

Neutralization may be performed before spray-drying. It may also be performed on microcapsules which have been spray-dried and then re-dispersed. Using a metal hydroxide, preferably an alkali earth metal hydroxide, may assist to re-disperse the spray-dried powder to its original particle size.

The microcapsules may be dried, for example spray-dried. Spray-drying the microcapsules may allow the microcapsules to be supplied in powder form. Some uses or applications of the microcapsules may require the absence of water. For example, the microcapsules may need to be in powder form (i.e. dry) if they are being incorporated into a dry formulation or an oil based formulation.

Further components or additives may be added to the microcapsules. For example, these may be added to the liquid microcapsule dispersion prior to spray drying. Optional additives include an adhesion promoter to enhance the formation of aggregates of multiple microcapsules in the dried powder. An aggregate of microcapsules may have the appearance of a raspberry i.e. multiple individual microcapsules stuck together. The adhesion promoter may be a reactive species such as a cross-linker or a polymeric binder. An example of a reactive species is ammonium zirconium carbonate which may cross-link with carboxylic acid groups in the microcapsule shell and thus bind the microcapsules in the aggregate together. A polymeric binder may work by acting as a 'glue' between the microcapsules to bind aggregate together. The polymeric binder may also increase the chemical resistance of the aggregate by coating the microcapsules.

An aggregate of microcapsules of the invention may have a median (d50) diameter (measured by particle size analysis as described herein) of at least 8µm, preferably at least 15µm, particularly at least 50µm. An aggregate of microcapsules may have a diameter of at most 500µm, preferably at most 200µm, particularly at most 100µm.

### First shell monomer

The polymeric shell comprises from 50 to 99.9% by weight of a first shell monomer which is ethylenically unsaturated and which has more than one ethylenic double bond.

The polymeric shell may comprise at least 55%, preferably at least 60%, particularly at least 65%, desirably at least 70% by weight (of the polymeric shell) of the first shell monomer. The polymeric shell may comprise at most 95%, preferably at most 90%, particularly at most 85%, desirably at most 80% by weight of the first shell monomer. For example, the polymeric shell may comprise from 60 to 90wt% of the first shell monomer.

The first shell monomer comprises at least two functional groups selected from acrylate, methacrylate and vinyl, more preferably from acrylate and methacrylate. Particularly preferably, the first shell monomer comprises two acrylate groups.

The first shell monomer may comprise a di(meth)acrylate, preferably a diacrylate. The first shell monomer may comprise an alkanediol di(meth)acrylate, preferably an alkanediol diacrylate. An example of an alkanediol di(meth)acrylate is butanediol diacrylate.

The first shell monomer may be selected from the group consisting of ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, dipentaerythritol hexa(meth)acrylate, triallylformyl tri(meth)acrylate, allyl methacrylate, trimethylol propane tri(meth)acrylate, tributanediol di(meth)acrylate, 3-acryloyloxyglycol monoacrylate, divinyl benzene, pentaerythritol tri(meth)acrylate and mixtures thereof.

Preferably, the first shell monomer is selected from the group consisting of ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, , and mixtures thereof.

Preferably, the first shell monomer is selected from the group consisting of 1,4-butanediol di(meth)acrylate, 1,6-hexanediol di(meth)acrylate, 1,3-butanediol di(meth)acrylate, neopentyl glycol di(meth)acrylate, 1,10-decanediol di(meth)acrylate, and mixtures thereof.

Preferably, the first shell monomer comprises butanediol di(meth)acrylate, preferably 1,4-butanediol diacrylate. The first shell monomer may consist essentially of, preferably consists of 1,4-butanediol diacrylate.

The first shell monomer may be oil soluble. The first shell monomer may have a low solubility in water. The first shell monomer may have a lower solubility in water at 25°C than the second shell monomer. For example, the first shell monomer may have a solubility of at most 8g/100cc in water at 25°C, preferably at most 5g/100cc, particularly at most 2g/100cc.

### Second shell monomer

The polymeric shell comprises from 0.01 to 50% by weight of a second shell monomer which is ethylenically unsaturated and which has one ethylenic double bond.

The polymeric shell may comprise at least 5%, preferably at least 10%, particularly at least 15%, desirably at least 20% by weight (of the polymeric shell) of the second shell monomer. The polymeric shell may comprise at most 45%, preferably at most 40%, particularly at most 35%, desirably at most 30% by weight of the second shell monomer. For example, the polymeric shell may comprise from 10 to 40wt% of the second shell monomer.

The second shell monomer may comprise a (meth)acrylic acid group, preferably a methacrylic acid group.

Preferably the second shell monomer is anionic.

The second shell monomer is selected from the group consisting of acrylic acid, methacrylic acid, alkyl esters and mixtures thereof. Preferably, the second shell monomer is selected from the group consisting of acrylic acid and methacrylic acid, alkyl esters thereof and mixtures thereof.

Preferably, the second shell monomer comprises (meth)acrylic acid, preferably methacrylic acid. The second shell monomer may consist essentially of, preferably consists of methacrylic acid.

The second shell monomer may have a solubility of at least 5g/100cc in water at 25°C, preferably at least 8g/100cc. The second shell monomer may have a higher solubility in water at 25°C than the first shell monomer.

### Polymeric shell and core

The polymeric shell consists of a copolymer. The copolymer may be a bipolymer, terpolymer or quaterpolymer, preferably a bipolymer or terpolymer, particularly a bipolymer. The polymeric shell consists of two monomers.

The polymeric shell forms less than 8% by weight of the total weight of the microcapsules. This is a lower amount of shell than is mentioned in the prior art. A lower amount of shell provides the advantage that there is more core per unit weight of the microcapsules, thus more active substance per unit weight. More active substance is likely to provide a greater beneficial effect.

The total weight of the microcapsules may be calculated by adding the weights of the shell and the core components used to make the microcapsules.

The polymeric shell may form at least 2% by weight of the total weight of the microcapsules, preferably at least 3%, particularly at least 4%, desirably at least 4.5%, especially at least 5%. The polymeric shell may form at most 7.95% by weight of the total weight of the microcapsules, preferably at most 7.9%, particularly at most 7.5%, desirably at most 7%, especially at most 6.5%. Preferably, the polymeric shell forms from 4wt% to 7.95wt% of the total weight of the microcapsules. The polymeric shell may form at least 0.5% by weight of the total weight of the microcapsules, preferably at least 1%.

The core may form at least 80% by weight of the total weight of the microcapsules, preferably at least 90%, particularly at least 92%, desirably at least 94%. The core may form at most 96% by weight of the total weight of the microcapsules, preferably at most 95%.

The weight ratio of the shell to the core may be from 1:12 to 1:25, preferably from 1:13 to 1:25, particularly from 1:12 to 1:20, desirably from 1:13 to 1:20.

The weight ratio of the first shell monomer to the second shell monomer may be at least 1:1, preferably at least 1.5:1, particularly at least 2:1, desirably at least 2.5:1. The weight ratio of the first shell monomer to the second shell monomer may be at most 20:1, preferably at most 15:1, particularly at most 10:1, desirably at most 6:1.

The second shell monomer may form less than 4wt% of the total weight of the microcapsules, preferably less than 3wt%, particularly less than 2wt%. The second shell monomer may form at least 0.5wt% of the total weight of the microcapsules, preferably at least 1wt%.

### Microcapsule core

The core comprises an active substance. The core material may comprise an active substance and a carrier material. The core may be hydrophobic. The carrier material may be hydrophobic. The active substance may be hydrophobic.

The core may comprise at least 50% by weight (of the core) of active substance, preferably at least 60%, particularly at least 70%, desirably at least 80% and especially at least 90%. The core may consist essentially of, preferably consists of the active substance.

The core may comprise a carrier material. The carrier material may be inert. The carrier material may be more hydrophobic than the active substance. The carrier material may assist the encapsulation of the active substance by assisting the active substance to remain in the core phase during polymerization of the shell. The carrier material may be selected from the group consisting of mineral oils, vegetable oils, mono-, di- and tri-glycerides and esters.

The core may comprise at most 50% by weight (of the core) of carrier material, preferably at most 40%, particularly at most 30%, desirably at most 20% and especially at most 10%. The core may comprise at least 1% by weight of carrier material.

The core comprises at most 40wt% of hydrocarbon, particularly at most 30wt%, desirably at most 20wt%, especially at most 10wt%. The core may comprise at least 1wt% hydrocarbon, preferably at least 5wt%. Without being bound by theory, a smaller amount of hydrocarbon in the core may reduce the vapour pressure and/or volatility of the core which may advantageously reduce the force and/or pressure the core exerts on the microcapsule shell during heating of the microcapsule. A less volatile core may advantageously combine with a shell of less than 8wt% of the total weight of the microcapsules to increase the microcapsule strength or its resistance to heat. The strength of the microcapsules may be demonstrated by a half-height measurement as described herein.

The core may not comprise a hydrocarbon. The active substance may not comprise a hydrocarbon. The carrier material may not comprise a hydrocarbon.

An indication of the volatility of the core may be given by its boiling point. A higher boiling point implies a less volatile core. The boiling point may be measured on a bulk sample of the core. The core may have a boiling point of at least 320°C, preferably at least 330°C, particularly at least 340°C, desirably at least 350°C. The core may have a boiling point of at most 600°C, preferably at most 550°C.

The carrier material may have a boiling point of at least 320°C, preferably at least 330°C, particularly at least 340°C, desirably at least 350°C. The carrier material may have a boiling point of at most 600°C, preferably at most 550°C.

### Active substances

The core is a phase change material (PCM).

The active substance may have a boiling point of at least 320°C, preferably at least 330°C, particularly at least 340°C, desirably at least 350°C. The active substance may have a boiling point of at most 600°C, preferably at most 550°C.

The microcapsules may comprise at least 50wt% of active substance, by total weight of the microcapsules, preferably at least 60wt%, particularly at least 70wt%, desirably at least 80wt% and especially at least 90wt%. The microcapsules may comprise at most 96wt% of active substance, preferably at most 95wt%, by total weight of the microcapsules.

### Phase Change Material (PCM)

The active substance is a phase change material (PCM), i.e. he core comprises a PCM.

The PCM may be organic. The PCM may be polymeric or non-polymeric. Preferably the PCM is organic and non-polymeric. The PCM may not comprise a hydrocarbon. The PCM may not comprise an alkane. The PCM may not comprise octadecane.

The PCM may be selected from the group consisting of aliphatic hydrocarbons, halogenated hydrocarbons, waxes, fats, mono- di- and tri-glycerides, fatty alcohols, fatty acids, fatty amines, fatty amides, amino acids, amine salts, urethanes, sarcosinates, sugars, sugar alcohols, alcohols, polyesters, ethers, aldehydes, ketones and esters, salts and mixtures thereof. Preferably the PCM is selected from waxes, fats, mono- di- and tri-glycerides, fatty alcohols, fatty acids, fatty amines, fatty amides, amino acids, amine salts, urethanes, sarcosinates, sugars and sugar alcohols, and esters, salts and mixtures thereof.

The PCM may be selected from fatty acids, fatty alcohols, fatty amines and derivatives thereof, preferably fatty acids, fatty alcohols and derivatives thereof, particularly fatty acids and derivatives thereof. Suitable derivatives may be esters, amides or salts, preferably esters or salts, particularly esters. Preferably the PCM is selected from fatty acids, fatty alcohols and fatty amines, and esters, amides or salts thereof.

The PCM may be an ester or a diester, preferably an ester. The PCM may comprise an ester, preferably consists of an ester. The PCM may comprise a mixture of a first ester and a second ester. The PCM ester may comprise a linear alcohol. The PCM ester may comprise a linear carboxylic acid. Preferbly the PCM ester comprises a linear alcohol and a linear carboxylic acid. The PCM ester may comprise a mono-alcohol. The PCM ester may comprise a mono-carboxylic acid. Preferbly the PCM ester comprises a mono-alcohol and a mono-carboxylic acid. Preferably the PCM comprises a fatty acid ester or a fatty alcohol ester, more preferably a fatty acid ester. The PCM may consist of a fatty acid ester or a mixture of fatty acid esters.

Preferably, the PCM is selected from the group consisting of methyl decanoate, methyl undecanoate, methyl laurate, methyl myristate, methyl palmitate, methyl stearate, methyl arachidate, methyl behenate, ethyl decanoate, ethyl undecanoate, ethyl laurate, ethyl myristate, ethyl palmitate, ethyl stearate, ethyl arachidate, ethyl behenate and mixtures thereof.

The PCM may be selected from the group consisting of propyl decanoate, propyl undecanoate, propyl laurate, propyl myristate, propyl palmitate, propyl stearate, propyl arachidate, propyl behenate, butyl decanoate, butyl undecanoate, butyl laurate, butyl myristate, butyl palmitate, butyl stearate, butyl arachidate, butyl behenate and mixtures thereof.

The PCM may be selected from the group consisting of pentyl decanoate, pentyl undecanoate, pentyl laurate, pentyl myristate, pentyl palmitate, pentyl stearate, pentyl arachidate, pentyl behenate, hexyl decanoate, hexyl undecanoate, hexyl laurate, hexyl myristate, hexyl palmitate, hexyl stearate, hexyl arachidate, hexyl behenate and mixtures thereof.

Preferably, the PCM is selected from the group consisting of heptyl octanoate, heptyl pelargonate, heptyl decanoate, heptyl undecanoate, heptyl laurate, heptyl myristate, heptyl palmitate, heptyl stearate, heptyl arachidate, heptyl behenate, octyl heptanoate, octyl octanoate, octyl pelargonate, octyl decanoate, octyl undecanoate, octyl laurate, octyl myristate, octyl palmitate, octyl stearate, octyl arachidate, octyl behenate and mixtures thereof.

Preferably, the PCM is selected from the group consisting of nonyl propionate, nonyl butanoate, nonyl pentanoate, nonyl hexanoate, nonyl heptanoate, nonyl octanoate, nonyl pelargonate, nonyl decanoate, nonyl undecanoate, nonyl laurate, nonyl myristate, nonyl palmitate, nonyl stearate, nonyl arachidate, nonyl behenate, decyl acetate, decyl propionate, decyl butanoate, decyl pentanoate, decyl hexanoate, decyl heptanoate, decyl octanoate, decyl pelargonate, decyl decanoate, decyl undecanoate, decyl laurate, decyl myristate, decyl palmitate, decyl stearate, decyl arachidate, decyl behenate and mixtures thereof.

Preferably, the PCM is selected from the group consisting of lauryl formate, lauryl acetate, lauryl propionate, lauryl butanoate, lauryl pentanoate, lauryl hexanoate, lauryl heptanoate, lauryl octanoate, lauryl pelargonate, lauryl decanoate, lauryl undecanoate, lauryl laurate, lauryl myristate, lauryl palmitate, lauryl stearate, lauryl arachidate, lauryl behenate and mixtures thereof.

Preferably, the PCM is selected from the group consisting of myristyl formate, myristyl acetate, myristyl propionate, myristyl butanoate, myristyl pentanoate, myristyl hexanoate, myristyl heptanoate, myristyl octanoate, myristyl pelargonate, myristyl decanoate, myristyl undecanoate, myristyl laurate, myristyl myristate, myristyl palmitate, myristyl stearate, myristyl arachidate, myristyl behenate and mixtures thereof.

Preferably, the PCM is selected from the group consisting of cetyl formate, cetyl acetate, cetyl propionate, cetyl butanoate, cetyl pentanoate, cetyl hexanoate, cetyl heptanoate, cetyl octanoate, cetyl pelargonate, cetyl decanoate, cetyl undecanoate, cetyl laurate, cetyl myristate, cetyl palmitate, cetyl stearate, cetyl arachidate, cetyl behenate and mixtures thereof.

The PCM may be selected from the group consisting of butyl decanoate, methyl laurate, octyl laurate, lauryl laurate, lauryl pelargonate, octyl myristate, myristyl pelargonate, nonyl laurate, methyl myristate, decyl laurate, octyl palmitate, lauryl caprate, cetyl octanoate, methyl palmitate, methyl stearate, lauryl laurate, octyl stearate, decyl palmitate, stearyl pelargonate, lauryl myristate, decyl stearate, stearyl caprate and cetyl palmitate. Preferably, the PCM is selected from the group consisting of decyl laurate, methyl stearate, methyl palmitate, lauryl laurate and cetyl palmitate.

Preferably, the PCM is selected from the group consisting of stearyl formate, stearyl acetate, stearyl propionate, stearyl butanoate, stearyl pentanoate, stearyl hexanoate, stearyl heptanoate, stearyl octanoate, stearyl pelargonate, stearyl decanoate, stearyl undecanoate, stearyl laurate, stearyl myristate, stearyl palmitate, stearyl stearate, stearyl arachidate, stearyl behenate and mixtures thereof.

Without being bound by theory, an advantage of a PCM selected from fatty acids, fatty alcohols, fatty amines and derivatives thereof, is a generally lower volatility (for example vapour pressure and/or boiling point) when compared with a hydrocarbon having an equivalent melting point. This may advantageously reduce the force and/or pressure the PCM exerts on the microcapsule shell during heating of the microcapsule. Without being bound by theory, the presence of the functional groups in the fatty acids, fatty alcohols, fatty amines and derivatives thereof may lead to more non-covalent bonding (for example, hydrogen bonding) when compared with a hydrocarbon. This may result in a relatively lower volatility (for example vapour pressure and/or boiling point) while maintaining an equivalent melting point.

When included in the core of a microcapsule, the PCM may have a melting point of at least -30°C, preferably at least -15°C, particularly at least 0°C, desirably at least 5°C, especially at least 10°C. The PCM may have a melting point of at most 150°C, preferably at most 100°C, particularly at most 60°C, desirably at most 40°C. The melting point may be measurable by Differential Scanning Calorimetry (DSC), for example by using a Mettler-Toledo machine (module DSC822-LT) and the control and analysis software provided by Mettler-Toledo. The difference between the melting point and the crystallization temperature of the PCM may be less than 10°C, preferably less than 8°C, more preferably less than 6°C. The melting point and crystallization temperature may be measured at the top of the relevant DSC peak (i.e. not measured at the onset or the offset of the phase change).

When included in the core of a microcapsule, the PCM may have a latent heat of crystallization (i.e. the latent heat of the transition from liquid to solid) of at least 100 J/g, preferably at least 150 J/g, more preferably at least 160 J/g, yet more preferably at least 170 J/g. The PCM may have a latent heat of crystallization of at most 300 J/g, preferably at most 250 J/g, more preferably at most 230 J/g, yet more preferably at most 210 J/g. The PCM may have a latent heat of crystallization in the range from 100 to 250 J/g, preferably in the range from 170 to 210 J/g. The latent heat of crystallization may be measurable by DSC.

The core may comprise at least 50%, by weight of the core, of PCM, preferably at least 60%, particularly at least 70%, desirably at least 80% and especially at least 90%. The core may consist essentially of the PCM.

### Optional core additives

The core may comprise a further component selected from the group consisting of nucleating agents, thermal stabilisers, anti-oxidants, fire retardants, structuring agents, binders, inorganic particles such as metals or metal oxides like silica, carbon particles and mixtures thereof. Preferably the core comprises a nucleating agent. Preferably the core comprises a silica. The core may comprise a gelling agent.

A nucleating agent may be included in the core to prevent sub-cooling of the PCM. The nucleating agent may have a higher melting point than the PCM. The nucleating agent may be organic or inorganic, preferably organic. The nucleating agent may be selected from fatty acids, fatty alcohols, fatty amines, mono-, di- and tri-glycerides, paraffins, polyethers, and derivatives or mixtures thereof, preferably selected from fatty acids, fatty alcohols, fatty amines, mono-, di- and tri-glycerides and derivatives or mixtures thereof, particularly selected from fatty acids, fatty alcohols, mono-, di- and tri-glycerides, and esters or mixtures thereof. The nucleating agent may be a wax. The nucleating agent may be selected from squalane wax, behenyl behenate, stearic acid, lauric acid, myristic acid, palmitic acid, behenic acid, stearyl alcohol, stearamide, beeswax, montane wax, dicalite, graphite, fumed silica, precipitated silica, potassium dihydrogen phosphate, calcium sulfate and mixtures thereof. The nucleating agent may have a melting point at least 10°C higher than that of the PCM, preferably at least 15°C higher, particularly at least 20°C higher. The nucleating agent may have a melting point at most 100°C higher than that of the PCM, preferably at most 50°C higher.

The core may comprise at least 0.1% by weight, of nucleating agent, preferably at least 1%, particularly at least 2%, desirably at least 5%. The core may comprise at most 20% by weight of nucleating agent, preferably at most 15%, particularly at most 10%.

### Physical properties of the microcapsules

It is known to quantify the resistance to temperature and general strength of a sample of microcapsules by measuring the half height of the microcapsules, as discussed in WO-A-2005/105291. The half-height value of the microcapsules is measured by thermo gravimetric analysis (TGA). The TGA method for measuring half height comprises applying heat to a dry sample of microcapsules at a rate of 20°C/min and measuring the weight loss. The half-height value is the temperature at which half the weight of the sample is lost. The half-height may be measured under an air flow.

The microcapsules of the present invention have a half height of at least 350°C, as measured by TGA. The microcapsules may have a half height of at most 500°C, preferably at most 450°C, particularly at most 400°C.

The microcapsules may have an median (d50) particle size diameter from 0.1 to 100 µm, preferably from 0.1 to 50 µm, particularly from 0.2 to 40 µm, desirably from 0.2 to 20 µm, especially from 0.5 to 10 µm. The microcapsules may have an median (d50) particle size diameter of at least 0.1 µm, preferably at least 1 µm, more preferably at least 5 µm, particularly at least 10 µm. The microcapsules may have an median (d50) particle size diameter of at most 100 µm, preferably at most 80 µm, more preferably at most 60 µm, particularly at most 40 µm. Particle size diameter may be measured by laser diffraction particle size analysis. The measurement may be made using a Malvern Mastersizer 2000 with the measurement cell Hydro 2000S. The particle size may be determined against a standard profile of polystyrene latex (refractive index 1.59).

### Products including microcapsules

A powder may comprise the microcapsules of the present invention. There may be no liquid phase present in the powder. The powder may be anhydrous. The powder may comprise less that 5wt% water, preferably less than 2wt%, particularly less than 1wt%, desirably less than 0.5wt%.

The powder may comprise at least 60wt% of the active substance, preferably at least 70wt%, particularly at least 80wt%, desirably at least 90wt%. The powder may comprise at most 95wt% active substance.

Alternatively, the microcapsules may be suspended or dispersed in a liquid phase. A dispersion may comprise the microcapsules of the present invention and a liquid phase. A measurement of the solid (microcapsule) content of the dispersion when compared with the liquid content may be made by simple water evaporation. A sample of the dispersion may be heated in an oven at 90°C for about 1.5 hour to evaporate the liquid phase. The wt% solid content in the dispersion may be determined by weighing the sample before and after the liquid phase is evaporated.

The dispersion may have a solids (microcapsule) content of at least 20wt%, preferably at least 30wt%, particularly at least 40wt%, desirably at least 45wt%. The dispersion may have a solids (microcapsule) content of at most 60wt%, preferably at most 55wt%, particularly at most 50wt%.

Preferably, the dispersion comprises at least 20wt% of the active substance, particularly at least 30wt%, desirably at least 40wt%, especially at least 45wt%. The dispersion may comprise at most 60wt% of the active substance, preferably at most 55wt%, particularly at most 50wt%.

A product comprising microcapsules according to the invention which have a PCM as the active substance may be selected from the group consisting of: textiles, clothing, garments, bedding, foams, mattresses, shoes, gloves, construction materials, concrete, plasterboard, fibreboard, plaster, electronics, micro-chips, batteries, heat sinks, insulation, thermal packaging, plastics, lights and LED's. Preferably, a product comprising microcapsules according to the invention which have a PCM as the active substance is selected from the group consisting of: textiles, clothing, garments, bedding, foams, mattresses, shoes, gloves.

### Examples

The invention is illustrated by the following non-limiting examples.

It will be understood that all test procedures and physical parameters described herein have been determined at atmospheric pressure and room temperature (i.e. about 20°C), unless otherwise stated herein, or unless otherwise stated in the referenced test methods and procedures. All parts and percentages are given by weight unless otherwise stated.

### Test Methods

In this specification, the following test methods have been used:
(i) Differential Scanning Calorimetry (DSC) was performed using a Mettler-Toledo machine (module DSC822-LT) and the control and analysis software provided by Mettler-Toledo. DSC may be used to measure for example, melting points, crystallisation points and latent heats.
(ii) Thermo-gravimetric analysis (TGA) was performed using a Mettler-Toledo machine (module TGA/SDTA851) and the control and analysis software provided by Mettler-Toledo. TGA half height was measured by applying heat to a dry sample of microcapsules at a rate of 20°C/min and measuring the weight loss. The half height value is the temperature at which half the weight of the sample is lost. The half height value may be considered as a measure of the strength of the microcapsules and their resistance to heat. A higher half height implies stronger capsules.
(iii) Particle size (such as d50 diameter) was measured by using a Malvern Mastersizer 2000 with the measurement cell Hydro 2000S. This is a laser diffraction particle size analysis. The particle size may be determined against a standard profile of polystyrene latex (refractive index 1.59).
(iv) Solids content was obtained by measurement of the solid (microcapsule) weight of a sample after all water had been evaporated by heating and comparing with the original sample weight.

### Materials Used

Materials used in the following Examples and their role are identified in Table 1.

**Table 1**

| **Chemical name** | **Role** |
|---|---|
| Polyvinyl alcohol | Polymerisation Stabiliser |
| Lauryl laurate | Phase change material (PCM) core |
| Methacrylic acid | Shell Monomer |
| 1,4-butanediol diacrylate | Shell Monomer |
| Vazo 67 ex DuPont | Polymerisation Initiator |
| 2-acrylamido-2-methylpropane sulphonic acid (AMPS) sodium salt | Polymerisation Stabiliser |
| Xiameter ACP-1400 ex Dow | Antifoam agent |
| Ammonium persulphate | Initiator |
| Sodium hydroxide | Neutralising agent |
| Syncrowax HGLC ex Croda (fatty trig lyceride) | Nucleating agent - core |

### Example 1

A water phase was prepared by mixing 130.0 g of deionised water, 39.0 g of a 10% strength aqueous solution of polyvinyl alcohol (88% hydrolysed, molecular weight 85,000 to 124,000), 1.3 g of a 50% aqueous solution of 2-acrylamido-2-methylpropane sulphonic acid Na salt and 0.1g Xiameter ACP-1400 antifoam. An oil phase was prepared by mixing 128.7 g of Lauryl Laurate (99wt% of the core), 1.3g Syncrowax HGLC nucleating agent (1wt% of the core), 2.075 g of Methacrylic acid (25wt% of the shell) 6.225g of butane diol diacrylate (75wt% of the shell) and 0.1 g of Vazo 67. After heating to 70°C, the two phases were dispersed using a high-speed mixer. After 5 minutes of dispersing, a stable, oil in water emulsion with a particle size (d50 diameter) of approximately 2 µm was obtained. The emulsion was degassed with nitrogen and heated to 80° C while stirring with an anchor stirrer. Polymerisation was allowed to take place over 2 hours after which 1.0 g of an 5% aqueous solution of ammonium persulphate was added to remove residual monomer from the mixture and the contents held for a further 1 hour at 85° C. The product was a composition comprising microcapsules according to the invention.

The composition was then cooled and a solution of 10% sodium hydroxide was added to increase the pH to 7.5 and neutralise the microcapsules. The resulting microcapsule dispersion had a solids content of 44.9% and a particle size (d50 diameter) of 2.3 µm and Brookfield viscosity (spindle 3, 20 rpm) of 100 cPs.

This procedure was performed with 3 different amounts of Syncrowax HGLC included in the oil phase, corresponding to 0.5wt%, 1wt% and 2wt% of the core. The amount of Lauryl laurate in the oil phase was adjusted to make up to 130g (100wt%) of core.

### Example 2

The half height of a dry sample of the 3 neutralised microcapsule samples produced in Example 1 was measured using TGA as described herein. The results are given in Table 2.

**Table 2**

| | | | |
|---|---|---|---|
| Amount of Syncrowax HGLC in the core (wt%) | 0.5 | 1 | 2 |
| TGA half height of the sample (°C) | 381 | 383 | 380 |

### Example 3

The latent heat of crystallisation of a dry sample of the 3 neutralised microcapsule samples produced in Example 1 was measured using DSC as described herein. The results are given in Table 3.

**Table 3**

| | | | |
|---|---|---|---|
| Amount of Syncrowax HGLC in the core (wt%) | 0.5 | 1 | 2 |
| Latent heat of crystallisation (J/g) | 181 | 180 | 177 |

### Example 4

The crystallisation point of a dry sample of the 3 neutralised microcapsule samples produced in Example 1 was measured using DSC as described herein. The results are given in Table 4.

**Table 4**

| | | | |
|---|---|---|---|
| Amount of Syncrowax HGLC in the core (wt%) | 0.5 | 1 | 2 |
| Crystallisation point (°C) | 22.5 | 22.3 | 22.9 |

It is to be understood that the invention is not to be limited to the details of the above embodiments, which are described by way of example only. Many variations are possible.

## Claims

1. Microcapsules comprising a core within a polymeric shell, wherein:
a) the polymeric shell consists of a copolymer formed from:
i) 50 to 99.9%, by weight of the polymeric shell, of a first shell monomer which is ethylenically unsaturated and which has more than one ethylenic double bond;
ii) 0.01 to 50%, by weight of the polymeric shell, of a second shell monomer which is ethylenically unsaturated and which has one ethylenic double bond; and
b) the core comprises an active substance and wherein the active substance is a phase change material and wherein the core comprises at most 40wt% of hydrocarbon; and
c) the polymeric shell forms less than 8wt% of the total weight of the microcapsules,
**characterized in that** the first shell monomer comprises at least two functional groups selected from acrylate, methacrylate, acrylamido, methacrylamido, allyl, methallyl and vinyl, and,
wherein the second shell monomer is selected from acrylic acid, methacrylic acid, alkyl esters thereof and mixtures thereof, and,
wherein the microcapsules have a half height as measured by thermo gravimetric analysis of at least 350°C, where heat is applied to a dry sample of microcapsules at a rate of 20°C/minute and measuring the weight loss, a half height value being the temperature at which half of the weight of the sample is lost.

2. Microcapsules according to claim 1 wherein the first shell monomer comprises an alkanediol di(meth)acrylate.

3. Microcapsules according to any preceding claim wherein the phase change material is selected from fatty acids, fatty alcohols and fatty amines, and esters, amides or salts thereof.

4. Microcapsules according to any preceding claim wherein the microcapsules comprise at least 80wt% of active substance, by total weight of the microcapsules.

5. Microcapsules according to any preceding claim wherein the polymeric shell forms from 4wt% to 7.95wt% of the total weight of the microcapsules

6. A dispersion comprising microcapsules according to any of claims 1 to 5 and a liquid phase, wherein the dispersion comprises at least 20wt% of the active substance.

7. A powder comprising microcapsules according to any of claims 1 to 5 wherein the powder comprises at least 60wt% of the active substance.

8. A product comprising microcapsules according to any of claims 1 to 5, wherein the product is selected from the group consisting of: textiles, clothing, garments, bedding, foams, mattresses, shoes, gloves, construction materials, concrete, plasterboard, fibreboard, plaster, electronics, micro-chips, batteries, heat sinks, insulation, thermal packaging, plastics, lights and LED's.

9. A process of forming microcapsules according to any of claims 1 to 5, wherein the process comprises the steps of:
a) forming a polymerization system comprising an aqueous phase and a dispersed oil phase wherein the active substance is present in the oil phase;
b) polymerising the shell monomers to form the microcapsules comprising a core of the oil phase within the polymeric shell; and
c) optionally, neutralizing the microcapsules using a metal hydroxide or an amine.

## Patentansprüche

1. Mikrokapseln, umfassend einen Kern innerhalb eines polymeren Mantels, wobei:
a) der polymere Mantel aus einem Copolymer besteht, das gebildet ist aus:
i) 50 bis 99,9 Gew.% des polymeren Mantels aus einem ersten Mantelmonomer, das ethylenisch ungesättigt ist und mehr als eine ethylenische Doppelbindung aufweist;
ii) 0,01 bis 50 Gew.% des polymeren Mantels aus einem zweiten Mantelmonomer, das ethylenisch ungesättigt ist und eine ethylenische Doppelbindung aufweist; und
b) der Kern eine aktive Substanz umfasst, und wobei die aktive Substanz ein Phasenwechselmaterial ist, und wobei der Kern höchstens 40 Gew.% Kohlenwasserstoff umfasst; und
c) der polymere Mantel weniger als 8 Gew.% des Gesamtgewichts der Mikrokapseln bildet,
**dadurch gekennzeichnet, dass** das erste Mantelmonomer mindestens zwei funktionelle Gruppen ausgewählt aus Acrylat, Methacrylat, Acrylamido, Methacrylamido, Allyl, Methallyl und Vinyl umfasst, und
wobei das zweite Mantelmonomer ausgewählt ist aus Acrylsäure, Methacrylsäure, Alkylestern davon und Mischungen davon, und
wobei die Mikrokapseln eine halbe Höhe, gemessen durch thermogravimetrische Analyse, von mindestens 350 °C haben, wobei einer trockenen Probe der Mikrokapseln mit einer Rate von 20 °C/Minute Wärme zugeführt wird und der Gewichtsverlust gemessen wird, wobei ein Wert der halben Höhe die Temperatur ist, bei der die Hälfte des Gewichts der Probe verloren gegangen ist.

2. Mikrokapseln nach Anspruch 1, wobei das erste Mantelmonomer ein Alkandioldi(meth)acrylat umfasst.

3. Mikrokapseln nach einem der vorhergehenden Ansprüche, wobei das Phasenwechselmaterial ausgewählt ist aus Fettsäuren, Fettalkoholen und Fettaminen sowie Estern, Amiden oder Salzen davon.

4. Mikrokapseln nach einem der vorhergehenden Ansprüche, wobei die Mikrokapseln mindestens 80 Gew.% der aktiven Substanz umfassen, bezogen auf das Gesamtgewicht der Mikrokapseln.

5. Mikrokapseln nach einem der vorhergehenden Ansprüche, wobei der polymere Mantel 4 Gew.% bis 7,95 Gew.% des Gesamtgewichts der Mikrokapseln bildet.

6. Dispersion, die Mikrokapseln gemäß einem der Ansprüche 1 bis 5 und eine flüssige Phase umfasst, wobei die Dispersion mindestens 20 Gew.% der aktiven Substanz umfasst.

7. Pulver, das Mikrokapseln gemäß einem der Ansprüche 1 bis 5 umfasst, wobei das Pulver mindestens 60 Gew.% der aktiven Substanz umfasst.

8. Produkt, das Mikrokapseln gemäß einem der Ansprüche 1 bis 5 umfasst, wobei das Produkt ausgewählt ist aus der Gruppe bestehend aus: Textilien, Bekleidung, Bekleidungsartikeln, Bettzeug, Schäumen, Matratzen, Schuhen, Handschuhen, Baumaterialien, Beton, Gipskarton, Fasernplatte, Putz, Elektronik, Mikrochips, Batterien, Wärmesenken, Isolierung, thermischer Verpackung, Plastikmaterialien, Lichtern und LEDs.

9. Verfahren zum Bilden von Mikrokapseln nach einem der Ansprüche 1 bis 5, wobei das Verfahren die Schritte umfasst:
a) Bilden eines Polymerisationssystems, das eine wässrige Phase und eine dispergierte Ölphase umfasst, wobei die aktive Substanz in der Ölphase vorhanden ist;
b) Polymerisieren der Mantelmonomere, um die Mikrokapseln zu bilden, die einen Kern der Ölphase innerhalb des polymeren Mantels umfassen; und
c) gegebenenfalls Neutralisieren der Mikrokapseln unter Verwendung eines Metallhydroxids oder eines Amins.

## Revendications

1. Microcapsules comprenant un noyau dans une enveloppe polymérique,
a) l'enveloppe polymérique étant constituée d'un copolymère formé de :
i) 50 à 99,9 %, par poids de l'enveloppe polymérique, d'un premier monomère d'enveloppe qui est éthyléniquement insaturé et qui possède plus d'une double liaison éthylénique ;
ii) 0,01 à 50 %, par poids de l'enveloppe polymérique, d'un deuxième monomère d'enveloppe qui est éthyléniquement insaturé et qui possède une double liaison éthylénique ; et
b) le noyau comprenant une substance active et la substance active étant un matériau de changement de phase et le noyau comprenant au plus 40 % en poids d'hydrocarbure ; et
c) l'enveloppe polymérique formant moins de 8 % en poids du poids total des microcapsules,
**caractérisées en ce que** le premier monomère d'enveloppe comprend au moins deux groupes fonctionnels choisis parmi acrylate, méthacrylate, acrylamido, méthacrylamido, allyle, méthallyle et vinyle, et,
le deuxième monomère d'enveloppe est choisi parmi l'acide acrylique, l'acide méthacrylique, des esters d'alkyle correspondants et des mélanges correspondants, et,
les microcapsules possédant une mi-hauteur telle que mesurée par analyse thermogravimétrique d'au moins 350 °C, où de la chaleur est appliquée à un échantillon sec de microcapsules à une vitesse de 20 °C/minute et en mesurant la perte de poids, une valeur à mi-hauteur étant la température à laquelle la moitié du poids de l'échantillon est perdue.

2. Microcapsules selon la revendication 1, le premier monomère d'enveloppe comprenant un di(méth)acrylate d'alcanediol.

3. Microcapsules selon une quelconque revendication précédente, le matériau de changement de phase étant choisi parmi des acides gras, des alcools gras et des amines grasses, et des esters, des amides ou des sels correspondants.

4. Microcapsules selon une quelconque revendication précédente, les microcapsules comprenant au moins 80 % en poids de substance active, par poids total des microcapsules.

5. Microcapsules selon une quelconque revendication précédente, l'enveloppe polymérique formant de 4 % en poids à 7,95 % en poids du poids total des microcapsules.

6. Dispersion comprenant des microcapsules selon l'une quelconque des revendications 1 à 5 et une phase liquide, la dispersion comprenant au moins 20 % en poids de la substance active.

7. Poudre comprenant des microcapsules selon l'une quelconque des revendications 1 à 5, la poudre comprenant au moins 60 % en poids de la substance active.

8. Produit comprenant des microcapsules selon l'une quelconque des revendications 1 à 5, le produit étant choisi dans le groupe constitué par : des textiles, des habits, des vêtements, une literie, des mousses, des matelas, des chaussures, des gants, des matériaux de construction, du béton, du placoplâtre, un panneau de fibres, du plâtre, des appareils électroniques, des micropuces, des batteries, des dissipateurs thermiques, une isolation, un emballage thermique, des plastiques, des éclairages et des LED.

9. Procédé de formation de microcapsules selon l'une quelconque des revendications 1 à 5, le procédé comprenant les étapes de :
a) formation d'un système de polymérisation comprenant une phase aqueuse et une phase huileuse dispersée, la substance active étant présente dans la phase huileuse ;
b) polymérisation des monomères d'enveloppe pour former les microcapsules comprenant un noyau de la phase huileuse dans l'enveloppe polymérique ; et
c) éventuellement, neutralisation des microcapsules en utilisant un hydroxyde métallique ou une amine.
